# DEMANDE DE BREVET EUROPEEN

(11) **EP 0 944 163 A1**
(43) Date de publication de la demande: **22.09.1999**
(21) Numéro de dépôt: 99400583.3
(22) Date de dépôt: 10.03.1999
(51) Int. Cl.: H02M 7/48

(54) **Structure pour une réalisation industrielle de convertisseur multiniveaux**

(30) Priorité: 16.03.1998 FR 9803189
(71) Demandeur: Alstom, 75116 Paris (FR)
(72) Inventeur: Courault, Jacques, 77250 Veneux les Sablons (FR)
(74) Mandataire: Gosse, Michel

(57) **Abrégé**

Structure de convertisseur multiniveaux composé de cellules en cascade, chaque cellule intermédiaire comprenant deux interrupteurs, avec un pôle de chacun des deux interrupteurs constituant une paire de pôles amont et l'autre pôle de chacun des interrupteurs contituant une paire de pôles aval, la paire de pôles aval d'une cellule amont étant connectée à la paire de pôles amont d'une cellule aval et un condensateur pour chaque cellule, connecté entre les deux pôles de la paire de pôles aval de la cellule.

Cette structure est composée de modules, parmi lesquels un module intermédiaire au moins (MOD) comprend, outre deux interrupteurs (IT2, IT'2) correspondant à ceux d'une dite cellule intermédiaire, un élément de condensateur amont (EC2AM) ayant pour capacité une fraction de la capacité du condensateur de cellule de ladite cellule amont, tandis qu'un module amont dudit module intermédiaire comprend un élément de condensateur aval ayant pour capacité une deuxième fraction de la capacité du condensateur de cellule de ladite cellule amont.

## Description

La présente invention concerne les dispositifs électroniques de conversion de l'énergie électrique du type décrit dans la demande de brevet FR - 2 679 715 A1.

Un convertisseur décrit dans cette demande de brevet est illustré, à titre d'exemple, par la figure 1 ci-annexée. Il comprend essentiellement, entre une source de courant C et une source de tension SE, une succession de cellules de commutation commandables CL1, CL2..., CLn, chacune ayant deux interrupteurs T1, T'1; T2, T'2...; Tn, T'n, avec un pôle de chacun des deux interrupteurs constituant une paire de pôles amont et l'autre pôle de chacun des interrupteurs contituant une paire de pôles aval, la paire de pôles aval d'une cellule amont étant connectée à la paire de pôles amont d'une cellule aval et la paire de pôles amont d'une première cellule CL1 étant connectée à ladite source de courant C, tandis que la paire de pôles aval d'une dernière cellule CLn est connectée à ladite source de tension SE, ce convertisseur comprenant encore un condensateur C1, C2..., Cn, pour chaque cellule, connecté entre les deux pôles de la paire de pôles aval de la cellule, ainsi que des moyens de commande (non représentés) régissant le fonctionnement nominal du convertisseur en agissant sur les interrupteurs des cellules successives de sorte que les deux interrupteurs d'une même cellule soient toujours respectivement dans des états de conduction opposés (ce qui est illustré par des liaisons de commande telles que Ic1), de sorte que, en réponse à un signal de commande de cellule fourni par lesdits moyens de commande, l'un des deux interrupteurs d'une même cellule soit successivement dans un premier état de conduction, puis dans un second état de conduction durant une période de convertisseur cycliquement répétée, et de sorte que, en réponse à des signaux de commande de cellules identiques mais décalés dans de temps d'une fraction de ladite période de convertisseur, les interrupteurs des cellules successives aient respectivement le même fonctionnement, mais décalé dans le temps de ladite fraction de période.

De préférence, ladite fraction de période est égale à l'inverse du nombre n de cellules, soit 2π/n, ce qui est optimal en ce qui concerne les harmoniques engendrées sur la sortie et permet un équilibrage naturel des tensions de charge des condensateurs du convertisseur. Un autre décalage est cependant concevable.

Dans un tel convertisseur. les condensateurs successifs C1, C2..., Cn ont des tensions de charge moyennes respectivement croissantes, la tension de charge moyenne du condensateur associé à chacune desdites cellules étant égale au produit d'une tension VE issue de ladite source de tension SE, de l'inverse du nombre de cellules du convertisseur et du rang de la cellule, soit VE/3, 2VE/3, VE, lorsque n = 3, c'est-à-dire lorsque le convertisseur a trois cellules seulement.

Dans ce qui suit on dénommera convertisseur multiniveaux un convertisseur répondant à la description qui précède.

L'avantage d'un tel convertisseur est que, en fonctionnement normal, lesdits interrupteurs ne supportent chacun qu'une fraction de la tension maximale à laquelle est soumis le convertisseur, c'est-à-dire celle qui correspond à la différence des tensions de charge des deux condensateurs de deux cellules adjacentes. On peut ainsi employer, pour ces interrupteurs, des composants moins chers et/ou plus rapides ; dans ce dernier cas, cela permet de réaliser un convertisseur dont la fréquence de fonctionnement est plus élevée, ce qui présente un grand intérêt pratique.

Dans ce qui précède, les inductances des circuits ne sont pas mentionnées. Par ailleurs, l'aspect modulaire du convertisseur invite l'homme de métier à une réalisation structurelle modulaire, chaque unité structurelle correspondant à une cellule et comprenant les deux interrupteurs d'une cellule et le condensateur de cellule connecté entre les pôles aval de ces interrupteurs.

Or, l'expérience à montré que de telles réalisations ne répondaient pas aux attentes. Les inventeurs ont pu établir que des surtensions transitoires augmentant les tensions que devaient supporter les interrupteurs avaient pour origine les inductances des conducteurs entre les unités d'une telle structure modulaire.

L'objet de la présente invention, basée sur de telles constations, est de faire en sorte que de telles inductances n'aient pas de tels effets préjudiciables.

L'invention s'applique donc dans le cas d'un convertisseur multiniveaux composé de cellules en cascade, chaque cellule intermédiaire comprenant deux interrupteurs, avec un pôle de chacun des deux interrupteurs constituant une paire de pôles amont et l'autre pôle de chacun des interrupteurs contituant une paire de pôles aval, la paire de pôles aval d'une cellule amont étant connectée à la paire de pôles amont d'une cellule aval et un condensateur pour chaque cellule, connecté entre les deux pôles de la paire de pôles aval de la cellule.

Selon l'invention, la structure de convertisseur multiniveaux est composée de modules, parmi lesquels un module intermédiaire au moins comprend, outre deux interrupteurs correspondant à ceux d'une dite cellule intermédiaire, un élément de condensateur amont ayant pour capacité une fraction de la capacité du condensateur de cellule de ladite cellule amont, tandis qu'un module amont dudit module intermédiaire comprend un élément de condensateur aval ayant pour capacité une deuxième fraction de la capacité du condensateur de cellule de ladite cellule amont.

De la sorte, ce module considéré comprend un élément capacitif connecté à chacune de ses paires de pôles, et non pas seulement un condensateur de cellule connecté à la paire de pôles aval, ce qui protège les interrupteurs de ce module contre les surtensions issues des inductances des conducteurs entre modules et notamment des conducteurs de raccordement au module amont.

Avantageusement lesdites première et deuxième fractions sont les mêmes pour tous les modules du convertisseur ; elles sont de préférence toutes égales à 1/2. En pratique, chacun desdits éléments de condensateur sera constitué de plusieurs unités de condensateurs.

De préférence, les conducteurs de raccordement des interrupteurs seront des barres plates et les barres des interrupteurs d'un module seront superposées par leurs grandes faces ; les unités de condensateur seront disposés contre lesdites barres empilées.

De même, les modules seront empilés et interconnectés par des barres plates d'interconnexion.

Selon une autre caractéristique de l'invention, lorsque ladite capacité d'un condensateur de cellule est telle qu'un élément de condensateur donné fournissant une partie de cette capacité aurait un volume dépassant des limites permises par des dimensions de module prescrites, une partie de cette capacité de condensateur de cellule est fournie sous la forme d'un condensateur additionnel connecté aux barres d'interconnexion couplées audit élément de condensateur.

Les différents objets et caractéristiques de l'invention apparaîtront plus clairement à la lumière de la description qui va suivre d'exemples de réalisation de l'invention, faite en se référant aux figures annexées qui représentent :
- la figure 1, déjà décrite, le schéma électrique simplifié d'un convertisseur multiniveaux connu,
- la figure 2, une structure de module de convertisseur multiniveaux conforme à l'invention,
- la figure 3, une structure de convertisseur multiniveaux à plusieurs module et condensateur additionnel, selon l'invention,

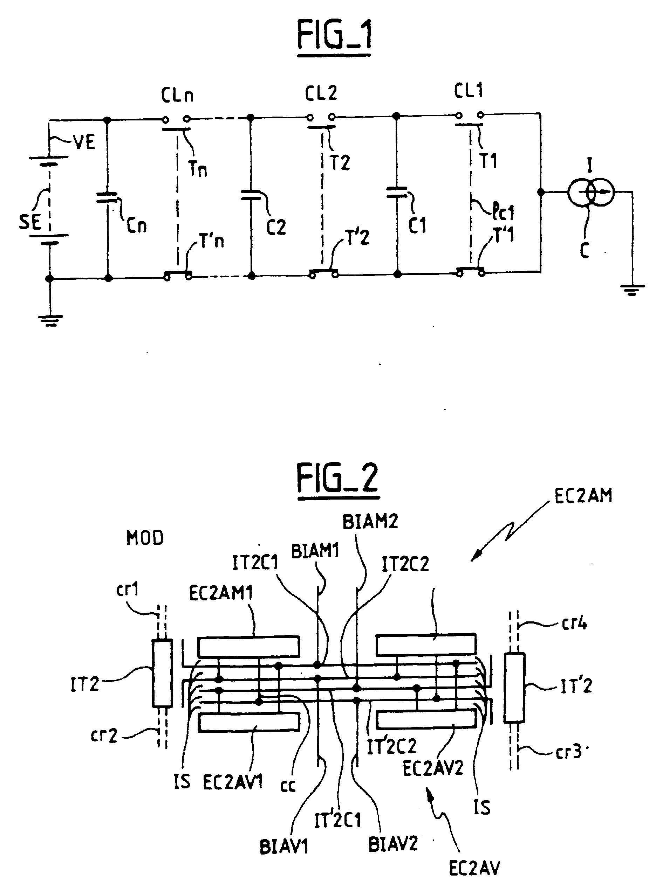

On ne reviendra pas sur la description électrique du convertisseur multiniveaux de la figure 1, si ce n'est pour mentionner qu'une réalisation classique comprendrait des unités identiques correspondant chacun à une cellule du convertisseur et comprenant donc chacun deux interrupteurs et un condensateur de cellule, par exemple les interrupteurs T2 et T'2 et le condensateur C2. Le condensateur C1 appartiendrait donc à une cellule précédente. Les connexions entre les pôles amont des interrupteurs T2 et T'2 et les pôles aval des terrupteurs T1 et T'1 seraient donc des conexions entre unités modulaires, relativement longues et par conséquent relativement inductives.

L'invention, comme on va le voir, consiste non seulement à limiter le caractère inductif des connexions, mais encore à faire en sorte que, physiquement, un élément capacitif soit raccordé aux pôles amont des interrupteurs de chaque cellule, afin que ceux-ci soient protégés des effets des inductance des conducteurs de raccordement avec la cellule amont.

Plus précisément, on se reportera à la figure 2, qui représente une structure de module de convertisseur multiniveaux MOD conforme à l'invention. Ce module comprend, outre les deux interrupteurs d'une cellule représentés en IT2 et IT'2, deux barres de connexion IT2C1 et IT2C2 que connecte l'une à l'autre sur commande (moyens de commande non représentés) l'interrupteur lT2, deux barres de connexion IT'2C1 et lT'2C2 que connecte l'une à l'autre sur commande (également non représentée) l'interrupteur IT'2, un élément de condensateur amont AC2AM, composé de deux unités de condensateur EC2AM1 et EC2AM2, un élément de condensateur aval composé de deux unités de condensateur EC2AV1 et EC2AV2. Additionnellement, des isolants répérés en IS isolent les barres de connexion.

Les interrupteurs sont des composants électroniques de puissance qui peuvent regrouper chacun la combinaison en parallèle d'un IGBT (Insulated Gate Bilateral Transistor) et d'un redresseur, dans un boîtier pourvu d'un refroisseur à liquide, raison pour laquelle des conduits d'un réseau de refroidissement ont été évoqués en cr1 à cr4.. L'interrupteur IT2 a deux bornes auxquelles sont respectivement connectées les barres de connexion IT2C1 et IT2C2. Ces barres sont des profilés de cuivre de section rectangulaire plate, afin de réduire le champ magnétique engendré par un courant, donc l'inductance de la barre. Comme les deux barres de connexion de l'interrupteur IT2 sont disposées l'une au-dessus de l'autre par leur plus grande surface, et qu'elles sont à tout moment parcourues par des courants égaux et de sens opposés, le champ magnétique engendré est minimal et l'inductance apparente de ces barres est minimale également. De plus, les deux unités de condensateur EC2AM1 et EC2AM2 formant l'élément de condensateur EC2AM sont disposés contre les barres de connexion, pour que les connexions des ces deux unités de condensateurs soient aussi courtes que possible. Il en va de même pour l'interrupteur IT'2, les barres IT'2C1 et lT'2C2 et les unités de condensateurs EC2AV1 et EC2AV2..

Les barres de connexion IT2C2 et lT'2C2 correspondent aux pôles amont de la cellule comportant les interrupteurs IT2 et IT'2, de la cellule CL2 de la figure 1, par exemple. Elles sont connectée par des barres d'interconnexion BIAM1 et BIAM2 aux pôles aval d'un module amont. Les unités de condensateur EC2AM1 et EC2AM2 sont connectées l'une et l'autre à ces barres. Ce sont des condensateurs de puissance. Ils sont en forme de parallélépipèdes rectangles de manière à donner au module de la figure 2 une forme compacte. L'emploi de deux unités en parallèle pour former l'élément de condensateur EC2AM concourt à la compacité et répartit l'effet de découplage capacitif procuré par ces unités multiples sur la longueur des barres de connexion. Il pourrait y avoir plus de deux unités.

Les barres IT2C1 et IT2C1 correspondent aux pôles aval de la cellule. Elles sont connectée par des barres d'interconnexion BIAV1 et BIAV2 aux pôles amont d'un module aval. Les unités de condensateur EC2AV1 et EC2AV2 sont connectées l'une et l'autre à ces barres et appellent les mêmes commentaires.

Avantageusement les unités de condensateur EC2AV1 et EC2AV2 sont disposées d'un côté de l'empilage de barres de connexion, alors que les unités de condensateur EC2AM1 et EC2AM2 sont disposées de l'autre côté. La structure du module est ainsi symétrique et les conditions électriques sont égales pour les deux interrupteurs, donc aucun d'entre eux n'est défavorisé.

A la figure 1, la cellule CL2 comprend les interrupteurs T2 et T'2, ainsi que le condensateur C2. Dans le module de la figure 2, les interrupteurs IT2 et IT'2 correspondent aux interrupteurs T2 et T'2. Dans une certaine mesure, l'élément de condensateur EC2AV correspond au condensateur de cellule C2 ; on y reviendra. Par contre, l'élément de condensateur EC2AM n'a pas de contre-partie dans la cellule CL2. Il s'agit en fait d'une fraction de la capacité du condensateur Ci de la cellule CL1 de la figure 1.

On peut imaginer, par ailleurs, que la cellule CL1 est réalisée selon ce qu'illustre la figure 2, sous la forme d'un module ayant un élément de condensateur aval semblable à l'élément de condensateur aval EC2AV de la figure 2. La capacité additionnée de ce dernier et de l'élément de condensateur amont EC2AM du module de la figure 2 constitue l'équivalent du condensateur Ci de la figure 1. En d'autres termes, on a divisé la capacité du condensateur C1 en deux parties et l'une de ces parties prend la forme de l'élément de condensateur EC2AM qui vient. dans le module de la figure 2 jouer un rôle de découplage entre les barres de connexion IT2C2 et IT'2C2. Des tensions transitoires perturbatrices engendrées par l'inductance des barres d'interconnexion BIAM1 et BIAM2 seront ainsi absorbées par cet élément de condensateur EC2AM.

En revenant à l'élément de condensateur aval EC2AV, pour les mêmes raisons qu'en ce qui concerne le condensateur de cellule C1, la capacité du condensateur de cellule C2 est divisée en deux parties et l'élément de condensateur EC2AV ne représente lui aussi qu'une fraction de la capacité du condensateur C2.

La construction décrite en prévoyant dans chaque module deux interrupteurs encadrés par deux éléments de condensateur ne change pas le schéma électrique du convertisseur, mais permet d'absorber des tensions transitoires perturbatrices au voisinage des interrupteurs et de préserver leurs conditions nominales de fonctionnement, de sorte que, soit les modules décrits peuvent fonctionner sous des tensions de service plus élevées, ce qui permet de réduire le nombre de module et donc le coût du convertisseur, soit les modules peuvent employer des commutateurs pour tensions plus faibles, ce qui apporte aussi une économie.

Le fractionnement des condensateurs C1, C2... du convertisseur de la figure 1 en éléments de condensateurs tels que EC2AM et EC2AV de la figure 2 peut se faire de différente façon. D'un point de vue pratique, le plus simple est de diviser ces condensateurs en parties égales, c'est-à-dire d'adopter la fraction 1/2, tout au long du convertisseur. Mais on peut imaginer d'autres règles de fractionnement. En effet, de cellule en cellule, la tension de service des condensateurs augmente, donc leur volume aussi. On pourrait donc envisager, la technologie le permettant, d'avoir un rapport de fractionnement différent, afin de diminuer le nombre de modules de volumes différents. Il suffit de veiller pour cela à ce que la capacité des éléments de condensateur reste toujours suffisante pour que leur rôle de protection contre les surtensions soit assumé.

On va maintenant considérer additionnellement le cas où, compte tenu de la tension de servicedes condensateur, le volume d'un élément de condensateur devriendrait trop important pour la place disponible dans un module du convertisseur.

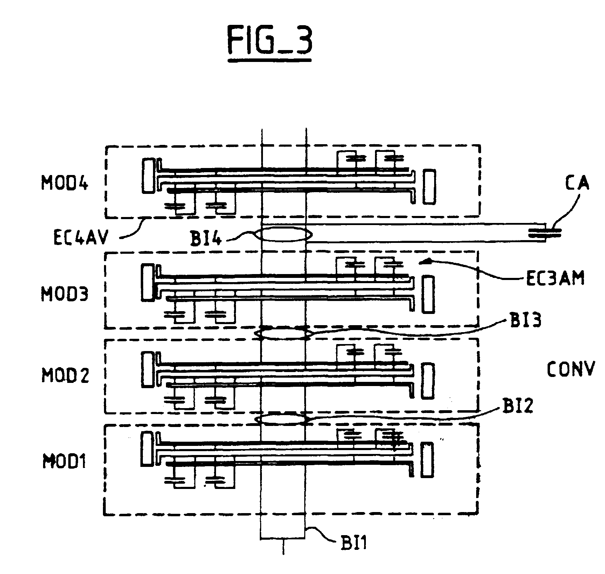

La figure 3 représente un convertisseur CONV constitué d'un empilage de modules MOD1, MOD2, MOD3, MOD4, chacun d'eux semblable à celui de la figure 2 et qui ne seront donc pas autrement décrits, connectés en cascade par des barres d'interconnexion BI2, BI3, BI4. Comme on peut le voir, selon une caractéristique additionnelle de l'invention. il est prévu de raccorder un condensateur additionnel CA à la barre BI4. Cela permet de limiter le volume des éléments de condensateurs EC3AM du module MOD3 et EC4AV du module MOD4.

On a vu, en se reportant aux figures 1 et 2, que le fractionnement d'un condensateur de cellule était utilisé pour limiter les surtensions sur les interrupteurs. On a aussi indiqué, dans le préambule de la présente description, que les tensions de service des condensateurs allaient en croissant. Or, le volume d'un condensateur, à capacité égale, augmente comme le carré de sa tension de service. On imagine aisément que le condensateur de cellule dont la capacité est partagée entre les éléments de condensateur EC3AM et EC4AV pourrait avoir une tension de service tellement élevée que le volume de ces éléments de condensateurs, le même dans le cas d'un partage 1/2, ou le volume d'un seul de ces éléments de condensateur, de EC4AV par exemple, dans le cas d'un partage inégal, dépasse ce que permet l'espace disponible dans un module standard, c'est-à-dire ayant les mêmes cotes. L'adjonction du condensateur additionnel CA permet un partage en trois fractions et le maintien du volume des éléments de condensateurs EC3AM et EC4AV dans les limites prescrites.

Bien entendu, un condensateur additionnel semblable pourrait être prévu ailleurs dans le montage pour les mêmes raisons. La limite à l'emploi de tels condensateurs additionnels est que les éléments de condensateurs prévus dans les modules conservent une capacité suffisante pour que l'effet de limitation des surtensions transitoires soit maintenu dans des limites satisfaisantes.

## Revendications

1. Structure de convertisseur multiniveaux composé de cellules en cascade (CL1, CL2...,CLn), chaque cellule intermédiaire (CL2) comprenant deux interrupteurs (T2, T'2), avec un pôle de chacun des deux interrupteurs constituant une paire de pôles amont et l'autre pôle de chacun des interrupteurs contituant une paire de pôles aval, la paire de pôles aval d'une cellule amont étant connectée à la paire de pôles amont d'une cellule aval et un condensateur pour chaque cellule (C1, C2...,Cn), connecté entre les deux pôles de la paire de pôles aval de la cellule, caractérisée en ce qu'elle est composée de modules (MOD ; MOD1 à MOD4), parmi lesquels un module intermédiaire au moins (MOD) comprend, outre deux interrupteurs (IT2, IT'2) correspondant à ceux (T2, T'2) d'une dite cellule intermédiaire), un élément de condensateur amont (EC2AM) ayant pour capacité une fraction de la capacité du condensateur de cellule (C1) de ladite cellule amont (CL1), tandis qu'un module amont dudit module intermédiaire comprend un élément de condensateur aval ayant pour capacité une deuxième fraction de la capacité du condensateur de cellule (C1) de ladite cellule amont (CL1).

2. Structure de convertisseur conforme à la revendication 1, caractérisée en ce que lesdites première et deuxième fractions sont les mêmes pour tous les modules du convertisseur.

3. Structure de convertisseur conforme à la revendication 2, caractérisée en ce que lesdites fractions sont toutes égales à 1/2.

4. Structure de convertisseur conforme à l'une quelconque des revendications précédentes caractérisée en ce que chacun desdits éléments de condensateur (EC2AM, EC2AV) est constitué de plusieurs unités de condensateurs (EC2AM1, EC2AM2, EC2AV1, EC2AV2).

5. Structure de convertisseur conforme à l'une quelconque des revendications précédentes caractérisée en ce des conducteurs de raccordement IT2C1, lT2C2, IT'2C1, IT'2C2) des interrupteurs (IT2, lT'2) sont des barres plates et les barres plates des interrupteurs d'un module sont superposées par leur grandes faces.

6. Structure de convertisseur conforme à la revendication 5, caractérisée en ce que lesdites unités de condensateur sont disposées contre lesdites barres plates empilées.

7. Structure de convertisseur conforme à l'une quelconque des revendications précédentes caractérisée en ce que des modules sont empilés et interconnectés par des barres plates d'interconnexion (BIAM1, BIAM2, BIAV1, BIAV2).

8. Structure de convertisseur conforme à la revendication 1, caractérisée en ce que, lorsque ladite capacité d'un condensateur de cellule est telle qu'un élément de condensateur donné (EC3AM, EC4AV) fournissant une partie de cette capacité aurait un volume dépassant des limites permises par des dimensions de module prescrites, une partie de cette capacité de condensateur de cellule est fournie sous la forme d'un condensateur additionnel (CA) connecté aux barres d'interconnexion (BI4) couplées audit élément de condensateur donné.
